(19) Europäisches Patentamt
European Patent Office
Office européen des brevets

(11) **EP 4 230 960 B1**

(12) **EUROPEAN PATENT SPECIFICATION**

(45) Date of publication and mention
of the grant of the patent:
**10.12.2025 Bulletin 2025/50**

(21) Application number: **23153244.1**

(22) Date of filing: **25.01.2023**

(51) International Patent Classification (IPC):
**G01C 21/32** (2006.01)

(52) Cooperative Patent Classification (CPC):
**G01C 21/3841; G01C 21/32; G01C 21/3848**

(54) **METHOD FOR GENERATING HIGH DEFINITION MAPS, AND CLOUD SERVER AND VEHICLE**

VERFAHREN ZUR ERZEUGUNG HOCHAUFLÖSENDER KARTEN SOWIE CLOUD-SERVER UND FAHRZEUG

PROCÉDÉ DE GÉNÉRATION DE CARTES HAUTE DÉFINITION, SERVEUR CLOUD ET VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.01.2022 GB 202201080**

(43) Date of publication of application:
**23.08.2023 Bulletin 2023/34**

(73) Proprietor: **Aptiv Technologies AG
8200 Schaffhausen (CH)**

(72) Inventors:
• **Colling, Pascal**
**42115 Wuppertal (DE)**
• **Müller, Dennis**
**47445 Moers (DE)**
• **Roese-Koerner, Lutz**
**42899 Remscheid (DE)**
• **Nunn, Christian**
**42499 Hückeswagen (DE)**

(74) Representative: **Lewis Silkin LLP
Arbor
255 Blackfriars Road
London SE1 9AX (GB)**

(56) References cited:
**US-A1- 2020 125 102 US-A1- 2021 063 200**

• **UZER FERIT ET AL: "A Lidar-based Dual-level
Virtual Lanes Construction and Anticipation of
Specific Road Infrastructure Events for
Autonomous Driving", 2019 IEEE INTELLIGENT
VEHICLES SYMPOSIUM (IV), IEEE, 9 June 2019
(2019-06-09), pages 214 - 219, XP033606188, DOI:
10.1109/IVS.2019.8814201**

## Description

## Technical Field

The present disclosure relates to a computer-implemented method of generating a map, as well as a cloud server and a vehicle for making improved ADAS decisions based on the map.

## Background

In advanced driver assistance systems (ADAS) or autonomous driving (AD), high-definition (HD) maps are important. A HD map generally refers to a map, precise up to a centimetre level having more details (e.g. road markings, traffic signs, road barriers) than conventional automotive maps (e.g. used for conventional car navigation) and therefore may be used in ADAS and/or AD. HD maps may be generated based on data of one or more sensors, such as data of radars, digital cameras, LiDARs, as well as GPS data, but may also be generated based on aerial imagery, for example generated by drones or low-orbital satellites.

While the sensor system of a vehicle (e.g. consisting of camera and radar) is responsible for the real time perception of the environment, HD maps provide information about the road system, the geometry ahead and the functional meaning of driving lanes, e.g. they allow to understand that a certain lane is a dedicated bus lane. Thus, they define where the vehicle is allowed to drive, where traffic signs are located and what is the speed limit for instance.

Those HD maps can set a kind of a framework in which the (ADAS and/or AD) vehicle can move. Furthermore, HD maps can be seen as backup solution when for instance the live system fails or is occluded.

Creating an HD map is a challenging task. Usually, map providers utilize multiple surveillance vehicles equipped with high-cost sensors (e.g. high-resolution camera and lidar). They then drive all roads in the relevant area to map and aggregate this data in an offline process. Sometimes, even additional information is augmented manually by human labor. To even worsen the problem, HD maps out date quite fast as the environment and road geometry changes over time. It is thus a challenging task to create HD maps and keep them up to date.

Uzer et al. "A Lidar-based Dual-level Virtual Lanes Construction and Anticipation of Specific Road Infrastructure Events for Autonomous Driving", 2019 IEEE Intelligent Vehicles Symposium (IV), 2019, stationary points are used in a first level of virtual lane construction and detection of infrastructure points (e.g. exits and bifurcations). Dynamic points feed the multiple objects history tracker which builds partial history trajectories constituting a second level of virtual lane building. Finally, the two channels are merged in multi-lane construction.

US 2020/0125102 A1 describes that perception data is received from a number of autonomous driving vehicles over a network. The perception data includes information describing a set of trajectories that a number of vehicles having driven through a road segment of a road and perceived by one or more ADVs using their respective sensors driving on the same road segment. In response to the perception data, an analysis is performed on the perception data, i.e., the trajectories, to determine one or more lanes within the road segment. For each of the lanes, a lane reference line associated with the lane is calculated based on the trajectories within the corresponding lane. The lane metadata describing the lane reference lines for the one or more lanes are stored in a lane configuration data structure such as a database. The lane configuration database can then be utilized for autonomous driving at real-time subsequently without having to use a high-definition map.

US 2021/0063200 A1 describes an end-to-end system for data generation, map creation using the generated data, and localization to the created map. Mapstreams, or streams of sensor data, perception outputs from deep neural networks (DNNs), and/or relative trajectory data-corresponding to any number of drives by any number of vehicles may be generated and uploaded to the cloud. The mapstreams may be used to generate map data-and ultimately a fused high definition (HD) map-that represents data generated over a plurality of drives. When localizing to the fused HD map, individual localization results may be generated based on comparisons of real-time data from a sensor modality to map data corresponding to the same sensor modality.

## Summary

The creation or generation of HD maps can be done in multiple ways. They can be annotated manually which is, in general, very costly due to the human annotation effort. Thus, this manual approach is not scalable since HD maps are needed almost everywhere and they have to be kept up to date.

Some conventional approaches go back to using GPS signals from multiple devices as kind of crowd sourcing data ( [1] : Cao at al. "From gps traces to a routable road map". In Proceedings of the 17th ACM SIGSPATIAL international conference on advances in geographic information systems, pages 3-12, 2009; [2]: Tang et al. "Lane-level road information mining from vehicle gps trajectories based on naive bayesian classification", ISPRS International Journal of Geo-Information, 4(4):2660-2680, 2015), but also these conventional approaches have shortcomings since they only provide little information or focus on routable road maps which are not as precise as HD maps. Moreover, the approaches in [1], [2] are not scalable as only GPS signals are considered.

Other conventional approaches train deep neural networks (DNN) on various sensor data to predict the road geometry ([3]: Homayounfar et al. "Learning to map by discovering lane topology". In Proceedings of the IEEE/CVF International Conference on Computer Vision, pages 2911-2920, 2019, [4]: Zürn et al. "Lane graph estimation for scene understanding in urban driving", arXiv preprintarXiv:2105.00195, 2021). In [4], a DNN is trained on various, partially processed sensor input data to infer the road geometry in a graph representation. This approach requires, however, annotated HD map data. The approach in [3] follows a similar approach as in [4] but mainly using lidar sensor data. The focus of that work is on the prediction of lane boundaries as well as forks and merges on highways, but requires training of a DNN, ground truths and thus HD map data early on.

The methods presented in [5]: Meyer et al. "Anytime lane-level intersection estimation based on trajectories of other traffic participants", In 2019 IEEE Intelligent Transportation Systems Conference (ITSC), pages 3122-3129, IEEE, 2019, and [6]: Meyer et al. "Fast lane-level intersection estimation using markov chain monte carlo sampling and b-spline refinement" In 2020 IEEE Intelligent Vehicles Symposium (IV), pages 71-76. IEEE, 2020 use the trajectories of detected and tracked other road users for lane estimation. Both works focus on intersection scenarios and represent the lanes as lane boundaries. The trajectories might be based on camera, radar or lidar. The authors do not use a DNN, they use probabilistic generative models, specifically a two-stage Markov Chain Monte Carlo sampling approach. In addition to [5], in [6] the authors incorporate a non-linear least square formulation to refine the results. The evaluation is mostly done on simulated data especially the vehicle trajectories are all simulated.

As already mentioned, it is not only important to create HD maps but also keep them up to date. Solutions for this are presented for instance in [7]: Pannen et al. "How to keep hd maps for automated driving up to date", In 2020 IEEE International Conference on Robotics and Automation (ICRA), pages 2288-2294. IEEE, 2020, and [8]: Kim et al. "Hd map update for autonomous driving with crowdsourced data", IEEE Robotics and Automation Letters, 6(2):1895-1901, 2021. The conventional systems are often only suitable for specific environments; complex scenarios, such as roundabouts, crossroads or the like are typically not considered. As such, there is a need for a robust and simpler way to generate HD lane maps that is available for any traffic environment or street scene scenario, and which can improve ADAS and/or AD.

The subject-matter of the independent claims solves the above-identified technical problems. The dependent claims describe further preferred embodiments.

According to a first aspect of the present invention, a computer-implemented method of generating a map is provided according to claim 1.

According to a preferred embodiment, the method further comprises: classifying the first trail and the plurality of second trails according to a predetermined set of different driving directions and generating a plurality of driving direction specific aggregated trails.

According to a preferred embodiment, the aggregated trails are associated with a density map (D) and the driving direction specific aggregated trails are associated with driving direction density maps $(D_d)$, the density map and the driving direction density maps being generated using data collected from the first trail and/or the plurality of second trails.

According to a preferred embodiment, the extraction of the trajectories of lane centers is performed by selecting aggregated trail values greater or equal than a predetermined threshold.

According to a preferred embodiment, the extraction of the trajectories of lane centers is performed based on a processed density map $(s(D))$ and/or processed driving direction density maps $(s(D_d))$, the processed density map $(s(D))$ and the processed driving direction density maps $(s(D_d))$ being obtained by employing a function to the density map $(D)$ and the driving direction density maps $(D_d)$ to determine respective local density maxima in a perpendicular direction to the aggregated trails and the driving direction specific aggregated trails.

According to a preferred embodiment, the extraction of the trajectories of lane centers is performed by tracking an ordered path of the local density maxima.

According to a preferred embodiment, the trajectories of lane centers is post-processed to connect endings of the extracted trajectories of the lane centers.

According to a preferred embodiment, the method further comprises: representing the aggregated trails in a directed graph representation of the HD map including a driving direction.

According to a preferred embodiment, the directed graph representation further includes one or more of a representation of a vehicle density, a lane fork, a lane merger, and a lane boundary.

According to a preferred embodiment, the method further comprises: determining a plurality of third trails of pedestrians using the sensor-based data; and aggregating the plurality of third trails to generate aggregated pedestrian trails in the grid map representation of the map.

According to a preferred embodiment, the plurality of the second trails of the other vehicles are determined by distinguishing the other vehicles according to vehicle classes and determining a set of vehicle class specific second trails; and the method further comprises: aggregating the plurality of vehicle class specific second trails to generate vehicle class specific aggregated trails in the grid map representation of the HD map.

According to a preferred embodiment, the method further comprises: storing the determined second trails together with meta information related to the second trails and/or the aggregated trails.

According to a preferred embodiment, the method further comprises: storing the determined second trails together with meta information related to a respective detection of classes.

According to a preferred embodiment, the grid map representation of the HD map includes average speed information for respective grid cells of the HD map.

According to a preferred embodiment, the sensor-based data are radar-sensor based data and/or LiDAR-sensor based data.

According to a preferred embodiment, the localization data are GPG-based data.

According to a second aspect of the present invention, a cloud server according to claim 17 is adapted to perform the method of any one of the first aspect and its preferred embodiments.

According to a third aspect of the present invention, a vehicle comprises a communication interface configured to receive a map generated by a method according to the first aspect, from a cloud server according to the second aspect; and a control unit configured to make advanced driving and safety decisions based on the received map.

According to a preferred embodiment, the control unit is configured to only use aggregated trails in the map which have been aggregated by using a minimum number of individual trails and/or have been aggregated by using a minimum number of trails determined within a specific amount of time in the past.

According to a preferred embodiment, the control unit is configured to output a control instruction to the vehicle to follow one of the aggregated trails from the received map.

According to a preferred embodiment, the control unit is further configured to output a control instruction to the vehicle to follow the one of the aggregated trails as long as the aggregated trail is accurate.

According to a preferred embodiment, the control unit is further configured to determine a curve speed recommendation based on the received map.

According to a preferred embodiment, a system comprises a cloud server according to the second aspect, and a plurality of vehicles of any one of the third aspect and its preferred embodiments.

**Brief Description of Drawings**

> **Figure 1** shows a system of vehicles and a cloud server according to an embodiment.
> **Figure 2** shows a device according to an embodiment used for acquiring radar-based sensor data.
> **Figure 3** shows a vehicle and detection areas according to an embodiment.
> **Figure 4** shows programmable signal processing apparatus according to an embodiment.
> **Figure 5** shows a flow diagram of a method for generating a map based on aggregated trails according to an embodiment.
> **Figure 6** shows a bounding box detection and tracking as well as trail determination (representing a trail in the map representation) according to an embodiment.
> **Figure 7** shows a result of the combined aggregation and extraction processes.
> **Figure 8** shows examples of direction density maps $D_d$ as derived from the overall density map D.
> **Figure 9** shows a method for extracting a trajectory of lane centers according to an embodiment.
> **Figure 10** shows an iteration of the pre-extraction according to an embodiment.
> **Figure 11** shows an example of the cutting a connecting processing according to an embodiment.
> **Figure 12** shows an example of the connecting of extracted trajectories of lane centers according to an embodiment.
> **Figure 13** shows a flow diagram of a method for determining vehicle class specific aggregated trails according to an embodiment.
> **Figure 14** shows a flow diagram of method implemented by vehicle according to an embodiment.

**Detailed description of Embodiments**

Embodiments of the present disclosure will now be described in reference to the enclosed figures. In the following detailed description, numerous specific details are set forth. These specific details are only to provide a thorough understanding of the various described embodiments. Further, although the terms first, second, etc. may be used to describe various elements, these elements should not be limited by these terms. These terms are only used to distinguish one element from another.

The present disclosure teaches the generation of a map (HD map) based on the aggregation of individual trails. Here, as ADAS vehicles perceive other road users around them (e.g. cars, trucks, busses, bicycles, motorcycles, pedestrians) and every road user is associated with an individual trail (as every road user leaves a trail behind, i.e. the path it was traveling on), trails are a condensed piece of information about the perceived road geometry, and the collection or aggregation of the individual trails of a plurality of road users provides an accurate information source.

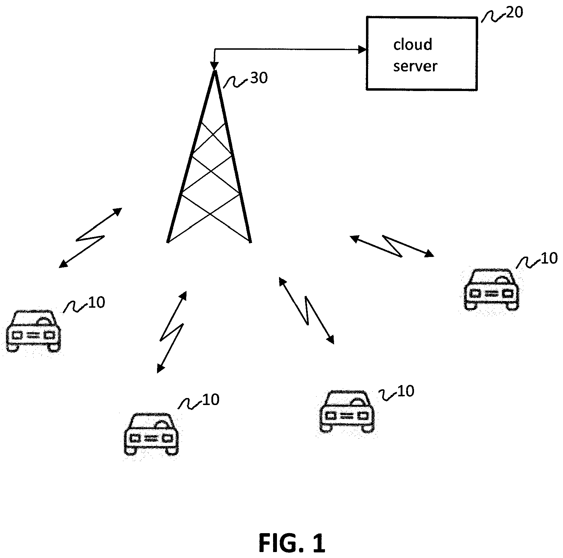

**Figure 1** illustrates a system of vehicles 10 and a cloud server 20 according to an embodiment. The vehicles 10 (e.g. a fleet of ADAS vehicles) are provided with a communication interface to implement a communication connection with the cloud server 20. Such a communication connection may be implemented in different forms; as illustrated in **Figure 1,** a vehicle 10 may have, for example, an over-the-air (OTA) interface (e.g. radio interface according to a wireless communication standard such as LTE, 4G, 5G, 6G) with a basis station 30. The basis station 30 provides a communication connection (e.g. via a core network, the internet or the like) to the cloud server 20. Based on this communication connection, data related to the individual trails of the vehicles 20 may be uploaded to the cloud server 20, and map information or other ADAS-related information may be downloaded from the cloud server 20 to the vehicles 10, for example in the form of a Software-as-a-Service (SaaS). Here, aggregating the individual trails and deriving additional high-level information from the aggregated trails constantly updates the underlying map. The resulting up-to-date and accurate map can subsequently be downloaded from the cloud server 20 to the vehicles 10 to, for example, improve existing ADAS features.

The vehicles 10, in particular ADAS vehicles, are equipped with a wide range of sensor units for environmental perception (e.g., camera and radar and/or LiDAR). These sensors allow the vehicles 10 to perceive its environment and, for example, detect lane markers, traffic signs and other road users including their dynamic properties (location and velocity relative to the ADAS vehicle). This perception software (SW) forms the basis of modern ADAS systems and will be present (in varying degrees of matureness and quality) in every ADAS vehicle. Based thereon, an ADAS vehicle is typically equipped with L2+ capabilities, that is, it can perform lane keeping and distance keeping.

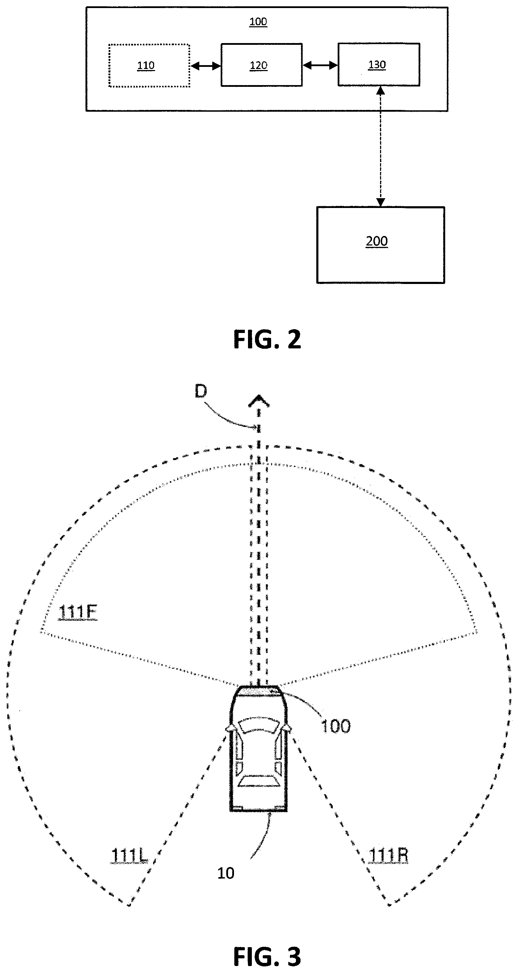

**Figure 2** shows a device 100 according to an example embodiment of the present disclosure used for generating a map. The device 100 may be provided in the vehicle 20 and, preferably, may be mounted on the vehicle 20 facing a driving direction D of the vehicle 20. The skilled person understands that it is not required that the device 100 faces the driving direction; the device 100 can also face to a side direction or to a rear direction. The device 100 may be a radar sensor, a radar module, part of a radar system. The device 100 may also be a LiDAR sensor, a LiDAR module, part of a LiDAR system. The device 100 may also be a device for the acquisition and processing of a plurality of different sensor data (such as radar data and LiDAR data). The vehicle 10 may also have more than one of such devices 100.

The device 100 may be provided as part of or, as shown in of **Figure 2,** interact with a driver assistance system 200 of the vehicle 10. The driver assistance system of the vehicle 200 may include advanced driver-assistance system (ADAS) functionality or autonomous driving functionality.

A vehicle 10 may be any land vehicle that is moved by machine power. The figures exemplify this vehicle 10 as a car, with which the device 100 is provided. The present disclosure is, however, not limited thereto. Hence, the device 100 may also be mounted to e.g. a lorry, a truck, a motorbike, a bus, a robot or the like.

The device 100 may have a plurality of detection areas, for example be oriented such that it has a forward detection area 111F, a left detection area 111L and/or a right detection area 111R as shown in the plan view of **Figure 3.** By way of non-limiting example, an object may be considered to be in the surrounding of the vehicle 10 at least when it is located within one or more of the plurality of detection areas of the device 100.

As illustrated in **Figure 2,** the device 100 includes an acquiring unit 120 and a processing unit 130. In addition, the device 100 may optionally include one or more sensors or sensor units (e.g. radar and/or LiDAR sensors) 110, but the one or more sensor units 110 may also be provided separate to the device 100.

The acquiring unit 120 may be configured (e.g. programmed) to acquire sensor-based data of the at least one sensor unit 110 of the vehicle 10 as well as localization data related to a localization unit (e.g. GPS unit, DPGS unit, not shown) of the vehicle 10. The sensor-based data may be radar data (from a radar sensor) and/or LiDAR data (from a LiDAR sensor). It is noted that the sensor-based data and the localization data of the vehicle are real world and not simulated data. Acquiring the sensor-based data from the sensor unit(s) 110 of the vehicle may my performed via an intra-vehicle data communication interface, e.g. based on CAN bus communication or an Ethernet network to a zonal controller or domain controller of the vehicle 10.

The processing unit 130 may be configured (e.g. programmed) to determine a first (individual) trail of the vehicle 10 itself using the localization data (e.g. using the GPS data) and a plurality of second (individual) trails of other vehicles or other objects around the vehicle 10 (in the detection area of the sensor unit(s)) using the acquired sensor-based data. A trail can generally be considered as a path or trajectory (set of coordinates in space) that the vehicle (or any other object) follows over time in a global coordinate system (GCS). Trail information can be stored in a memory of the vehicle 10, e.g. together with additional meta-information, such as recording time, velocity of the tracked object and the like. Here, the first trail is associated with the individual path of the vehicle 10 itself (also referred to as ego-vehicle in the following). In other words, a trajectory or trail $t_{ego}$ of the ego-vehicle may be provided by the localization (using the GPS data stream) and the (known) dimension of the vehicle.

The skilled person understands that this first trail may be a set of GPS or DGPS localization data of the vehicle 10. The second trails are associated with individual trails or paths of other observed road users detected in sensor detection area of the ego-vehicle 10. Here, as the sensor-based data (due to radar, and/or LiDAR detection) are typically associated with relative position data with regard to the ego-vehicle, the localization data (first trail) can be advantageously used to determine the plurality of second trails in the GCS.

The processing unit 130 may be further configured (e.g. programmed) to aggregate the first trail (of the ego-vehicle) and the plurality of second trails of the other vehicles (other road users) or to aggregate the plurality of second trails of the other vehicles (other road users which may also include motorcycles, bicycles or the like) to generate a plurality of aggregated trails. Generating aggregated trails can generally be considered as collecting of the individual trails together, in other words as a sum of the individual trails. The skilled person understands that aggregating individual trails together allows to determine a (statistically averaged) trail that a majority of road users have taken and in which individual deviations are averaged out. As the first trail of the ego-vehicle usually has a better detection accuracy, e.g. because GPS localization can be performed with high accuracy), as compared to the sensor-based determination of the second trails of the other vehicles, this further improves the accuracy of the aggregated trails.

The processing unit 130 may perform the aggregation by associating the trail of the ego-vehicle with a higher statistical weight as compared to the other detected vehicles. In addition, different sizes of detected vehicles may also be associated with a different statistical weight when performing the aggregating because a big truck is more likely to accurately follow the lane (e.g. lane center) as compared to a small vehicle or a motorcycle which has some flexibility in driving a road or lane more toward the middle of the road or more to the side of the road.

Here, the generated aggregated trails can be included into a grid map representation of the map (HD map). That is, a map (e.g. in a 2D Cartesian coordinate system) of a predetermined spatial resolution may be subdivided into a plurality of individual grid cells of a predetermined size, for example each covering a size of 10cm $\times$ 10cm, and the aggregated trails are included in that map. Thus, a single ego vehicle can provide data from which detailed information about multiple lanes can be aggregated to create a HD map.

The skilled person understands that the aggregated trails can be generated in any traffic environment and also in any geographical area, and corresponding maps are low-cost accurate and reliable maps.

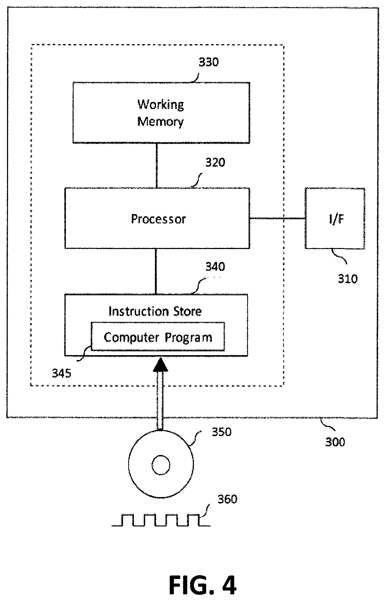

**Figure 4** is a schematic illustration of programmable signal processing apparatus 300, which may be configured to implement the functionality of the device 100 of **Figure 2.**

The signal processing apparatus 300 has an interface module 310 providing means, e.g. one or more antennae or wired connections, for transmitting and receiving information, e.g. for providing a communication connection to the cloud server 20. The signal processing apparatus 300 also has a processor 320, e.g. a CPU, for controlling the programmable signal processing apparatus 300 to perform the functions of the device 100, a working memory 330, e.g. a random-access memory, and an instruction store 340 storing a computer program 345 having computer-readable instructions which, when executed by the processor 320, cause the processor 320 to perform the functions of the device 100.

The instruction store 340 may include a ROM, e.g. in the form of an electrically-erasable programmable read-only memory (EEPROM) or flash memory, which is pre-loaded with the computer-readable instructions. Alternatively, the instruction store 340 may include a RAM or similar type of memory, and the computer-readable instructions can be input thereto from a computer program product, such as a computer-readable storage medium 350 such as a CD-ROM, etc. or a computer-readable signal 360 carrying the computer-readable instructions.

The device 100 may alternatively be implemented in non-programmable hardware, such as an application-specific integrated circuit (ASIC) or in any other suitable manner, using any suitable combination of hardware and software components.

As discussed above, the present disclosure provides various techniques to generate a map in a more accurate and reliable manner.

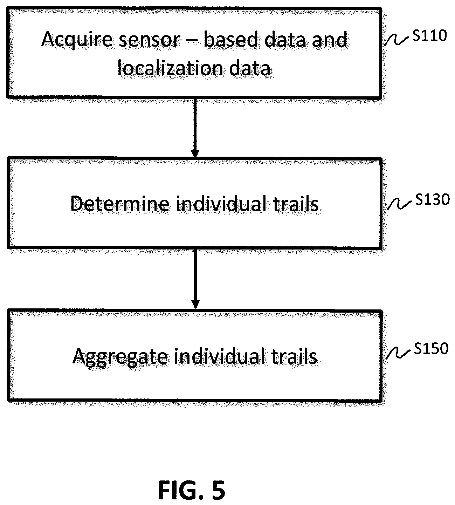

The processing apparatus 300 may also be implemented in the cloud server 20 to implement the functionality of the device 100 of **Figure 2.** In other words, the functionality of the acquiring unit 120 and the processing unit 130 can also be implemented in the cloud server. **Figure 5** illustrates a flow chart of a method for generating a map based on aggregated trails according to a further embodiment as implemented in a base station 20.

According to step S110, the cloud server 20 acquires the sensor-based data and the localization data, as explained above, from a plurality of vehicles 10. The acquisition may be performed by an over-the-air (OTA) communication connection between the vehicles 10 and the cloud server 20, e.g. via the I/F 310 to one or more base station(s) 30, as explained above.

According to step S130, the cloud server 20 (by the processor 320 implementing the functionality of processing unit 130) may then determine the first trails of a plurality of ego-vehicles using the localization data and, for each of the plurality of ego-vehicles, determine a plurality of second trails of other detected vehicles or objects in the detection areas of the ego-vehicles.

A preferred embodiment of the determination of the second trails follows the detection and tracking using LiDAR-based sensor data. That is, the ego vehicle is equipped with a LiDAR-based sensor system that allows for performing 3D object detection and tracking and is further equipped with a GPS unit to track the locations of the vehicle. This is, however, not limiting and the vehicle detection and tracking can also be performed using radar-based data (Manjunath et al. "Radar Based detection and Tracking for Autonomous Driving", 2018 IEEE MTT-S International Conference on Microwaves for Intelligent Mobility, DOI: 10.1109/ICMIM.2018.8443497).

Here, a 3D bounding box detection and a tracker (due to LiDAR-based sensor data and/or radar-based sensor data) may be used to identify the road users over multiple detection frames. That is, 3D object detection and tracking is applied to the sensor-based data. The detections of another vehicle (e.g. car, truck, bus and the like) may be represented by a 3D bounding box (e.g. a cuboid) indicating a size of the vehicle (e.g. 2m (width) $\times$ 4m (length) $\times$ 2m (height)) and respective positions of the bounding box, for a plurality of times or detection frames, may be transformed into the global coordinate system (GCS). The orientation of the bounding boxes (cuboids) can also be determined, and therefore an indication as to which side of the bounding box belongs to the front of the corresponding vehicle, thus indicating a driving direction. The detections (cuboids) may then be recorded together with the driving direction of the another (detected) vehicle. A tracker confidence and a flag if the tracked vehicle is stationary or moving may also be provided.

The bounding boxes (cuboids) may then be processed into a grid map representation indicating a trail or trajectory of another vehicle.

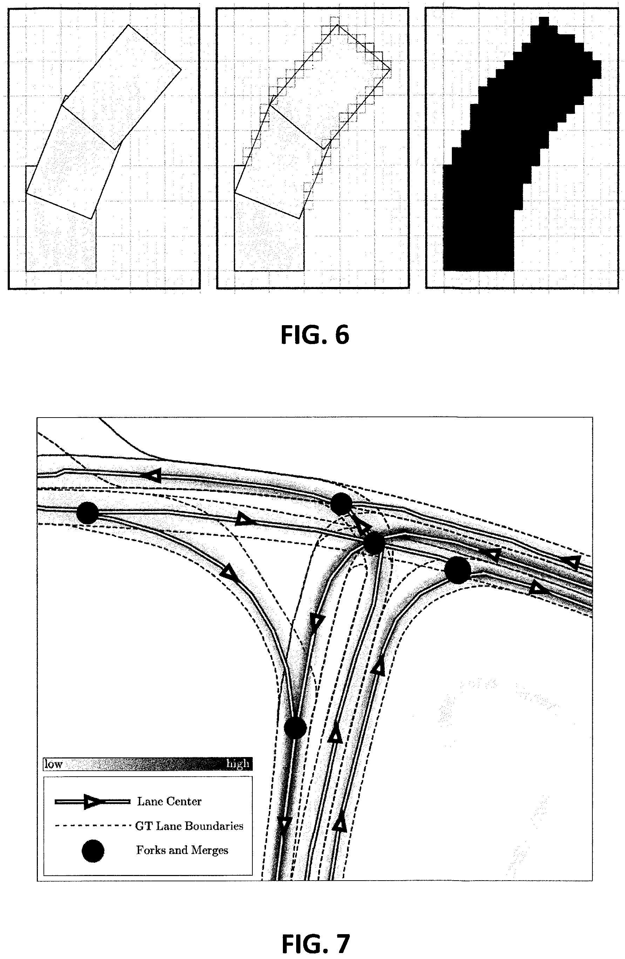

**Figure 6** illustrates the example of bounding box detection and tracking as well as trail determination (representing a trail in the map representation). The left panel of **Figure 6** schematically illustrates detected and tracked cuboids for 3 frames. In particular, once the other road user (other vehicle) is detected, the position, orientation and driving direction can be derived from the GPS position of the ego-vehicle and the calibration of the sensor system. In case of a LiDAR sensor, which provides dense and spatial data with depth information, the cuboids from the local coordinate system can be transformed to the global coordinate system.

A trajectory (track) or trail $t_D$ of a detected vehicle may be defined as a trajectory of the detected cuboids $c_j$ in respective detection frames j = 1, ..., p, i.e., t = $\{c_1, ... , c_p\}$, where $p$ is the last detected frame.

Each trail $t_D$ may be enriched with meta information, such as a tracker confidence value $t_{conf} \in [0, 1]$, a distance range $t_r \in \mathbb{R}$ (set of real numbers) in which the cuboids should be located to the ego-vehicle, and/or the Euclidean distance of the first and the last cuboid of a trail $t_{len} \in \mathbb{R}$. In general, each trail can be associated (e.g. stored) together with such meta information as described here, or further described below.

The middle panel of **Figure 6** illustrates the processing to transform the detected and tracked cuboids into an individual trail. The entire geographical area covered by the cuboids is considered as the individual trail; that is, also the overlapped region of two subsequent cuboids is preferably counted only once for the individual trail, as shown in the right panel of Figure 5. Here, the grid in the background of **Figure 6** represents the map (which may be considered as a matrix) and the black cells represents a value of 1 of that trail (right panel).

By recording a location multiple times and by detecting multiple vehicles covering the same location, multiple detections can be given (*aggregated*) for the lane estimation. Local grid cell regions of the map may thus have aggregation values, initially set to zero and increased by one for every trail going through the local grid cell region.

Further, if the individual trail of the ego-vehicle (first trail) is also used for generating the aggregated trails, then the localization data of the ego-vehicle is used together with the known 3D dimension of the ego-vehicle to generate a corresponding representation as shown in **Figure 6.**

Further, according to step S150 in **Figure 5,** the cloud server 20 (by the processor 320 implementing the functionality of processing unit 130) may then aggregated the first trails (of the ego-vehicles) and the plurality of second trails of the other vehicles (other road users) or aggregate the plurality of second trails of the other vehicles (other road users) to generate a plurality of aggregated trails.

For the aggregation, a given geographical location (local region) may be represented as a grid map, as shown in **Figure 6,** where each grid cell covers a predetermined area, e.g. a 10cm $\times$ 10cm area in GCS. A density map $D \in \mathbb{N}^{m \times n}$ may be defined with regard to the aggregation of a given spatial location. The density map D may represent a density of moving vehicles.

At the beginning all values of the grid map D are set to 0. Then, an iteration is performed over all trails ($t_D$ and/or $t_{ego}$) that cover the given location. For every cuboid $c_j$ of a moving trail $t_D$, the detected cuboids may be mapped into the density map and the respective values of the density map are increased by a predetermined value (e.g. by a value of one) in case of overlap of the location (grid) with the cuboid.

Each value in D can be increased only once by the cuboids of the current trail. That is, when considering, for example, the 3 detected cuboids in Fig. 6 (left panel), even in an overlapped region of 2 subsequently detected cuboids, the value in D is only increased once. This prevents the values in D from incorrectly adding up, for example for a moving vehicle that comes to a stop e.g. when it comes to a traffic light.

After processing the cuboids of a first trail, a value in D can either be 0 or 1, see **Figure 6** (right panel). Then, after processing the cuboids of a second trail, a value in D can either be 0 or 1 or 2, etc.

As the cloud server 20 has acquired respective data for a plurality of vehicles, the aggregated trails can thus be generated from a higher number of individual (first and second) trails, and thus the aggregated trails and the resulting map is more accurate.

The skilled person understands that not all steps of **Figure 5** have to be performed by the cloud server 20. For example, the steps S110 and S130 can be performed by the individual ego-vehicles 10, for example in the form of a pre-processing, and only the information associated with the individual trails is transmitted to the cloud server to aggregate the individual trails. This may reduce the amount of data that has to be communicated between the fleet of ADAS vehicles and the cloud server, and thus lead to providing a faster update of a HD map.

The above concept to create HD maps is thus based on estimated individual trajectories *(second trails)* of observed road users and may as well include the driving path (*first trails*) of the ego vehicle(s). Data from multiple sensor recordings (based on real world data) may be used, i.e. geographical locations may be recorded more than once. However, a single recording may also provide a sufficient number of information to estimate the individual trajectories. As explained, the trails *(second trails)* are related to detected and tracked vehicles from LiDAR point cloud data and/or radar data. This leads to aggregated trails and thus confirmed drivable lanes which may be used by the vehicles for improving ADAS functionalities, as will be further detailed below.

According to the present invention, the aggregation process described above is followed by an extraction process in which trajectories of lane centers are extracted from the aggregated trails. A lane center may be considered as a middle point of a lane having equal space to the left and right for driving; a trajectory of lane centers may thus follow the middle points of the lane and may be considered as an optimal path for the purpose of autonomous driving. Extracting the lane centers may be performed in different ways, e.g. using the Watershed transformation (see, e.g., Beucher "The Watershed Transformation Applied to Image Segmentation", Scanning Microscopy: Vol. 1992: No. 6, Article 28) to cluster and segment the aggregated trails.

An example of the outcome of the combined aggregation and extraction processes is shown in **Figure 7**. In particular, **Figure 7** shows a portion of a generated map in a complex traffic situation, and specifically showing aggregated trails (generated as explained above), as well as corresponding driving directions, extracted lane centers, lane boundaries, and forks and mergers. The aggregated trails may be displayed together with an indication of traffic density (low vs. high), for example derived from the density map discussed above. The skilled person understands that high density refers to more traffic as can be expected in geographical areas in which the lane is diverging (forks) into two or more lanes or diverging (merges) into a single lane.

In a preferred embodiment, the first individual trail of the ego-vehicle(s) and the plurality of second trails of the detected other vehicles may be classified according to a predetermined set of different driving directions and the plurality of driving direction specific aggregated trails may be generated.

Here, the driving direction may be derived from the orientation of the cuboids (from the 3D object detection and tracking described above). The orientation in GCS can be provided by the yaw rate $\varphi \in [0, 360]$ (degrees). Here, the orientation may be discretized into four classes (predetermined set of different driving directions) and may define four direction-depended density maps, for the sake of brevity direction density maps $D_d \in \mathbb{N}^{m \times n}$, d = 1, ... , 4. Then, an iteration over all trails and cuboids may be performed, as described above, but depending on the orientation of the cuboids, the cuboids may be projected to the direction density maps such that $D_d$ contains the cuboids with $\varphi$ as follows:

- $D_1$: $\varphi \in [0, 90)$ (north to east),

- $D_2$: $\varphi \in [90, 180)$ (east to south),
- $D_3$: $\varphi \in [180, 270)$ (south to west),
- $D_4$: $\varphi \in [270, 360)$ (west to north).

This mapping may also dependent on meta information which, in general, defines the aggregation strategy. For example, if only the trails (second trails) are aggregated that are close to (i.e. within a specific area around) the ego-vehicle (i.e., low choice of $t_r$) and that have a high tracker confidence $t_{conf}$ this is a more conservative strategy.

After mapping the trails *(second trails)* of road users the cuboids of the ego-vehicle may also be mapped and aggregated into direction density maps $D_d$, d = 1, ..., 4. This may be done with or without any meta information regarding the ego-vehicle itself. It is also possible to have an incremental weight of the ego vehicle of e.g. 2. Since the ego-vehicles trails can be based on an accurate localization e.g. dGPS, it may have less localization uncertainty than trails from detected and tracked vehicles (other road users).

The aggregated trails may thus be associated with a density map D, as explained above, and the driving direction specific aggregated trails may be associated with driving direction density maps $D_d$, whereby the density map and the driving direction density maps are generated using data collected from the first trail and the plurality of second trails. That is, these maps may be generated by iterating over all individual trails, whereby the second trails (regarding the detected vehicles or objects in the environment of the ego-vehicles) may be considered with regard to a specific distance $t_r$ from the ego-vehicle and(or having a specific tracker confidence $t_{conf}$. In addition, the number of cuboids per track, a length in terms of distance between first and last cuboid of an individual track $t_{len}$ may be considered as well. This can further improve and control the accuracy and reliability of the generated maps.

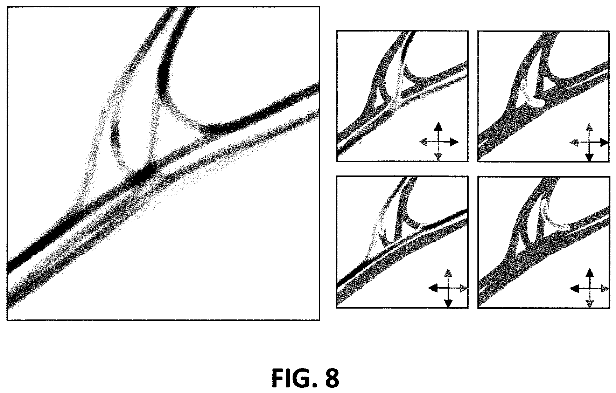

**Figure 8** illustrates examples of direction density maps $D_d$ (driving direction specific aggregated trails) as derived from the overall density map $D$ (aggregated trails) in the left panel. The skilled person understands that the overall density map D (aggregated trails) is the sum of the four direction density maps $D_d$ (driving direction specific aggregated trails).

The above direction-dependent density maps can be advantageously used in another embodiment for the extraction of the lane centers. This is motivated by the observation, that a direction independent density map $D$ can lead to extracting and connecting opposing lanes, thus to an incorrect mapping. The extraction may be applied to the aggregated data of the map representation, resulting in a structured dataset, which represents the lanes as lane centers with regard to the driving direction.

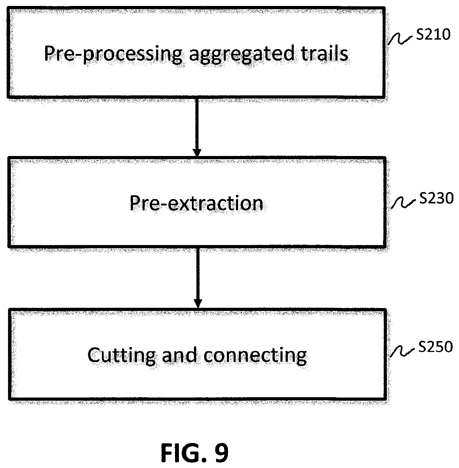

**Figure 9** shows a method for extracting a trajectory of lane centers according to a preferred embodiment.

According to step S210 of **Figure 9,** a pre-processing of aggregated trails may be performed. In this pre-processing, only aggregated trail values in D and $D_d$ greater or equal than a predetermined threshold are selected for the extraction of lane centers. This advantageously avoids false positive lanes and/or unwanted detections. It is noted that the predetermined threshold values may be different for D and $D_d$.

That is, as pre-processing of the extraction, the values in $D_d$, d = 1, ..., 4 may be set to 0 where the values are not greater or equal than a given minimal number of trails $num_t$. With this parameter false positive lanes or unwanted detections may be avoided. For example, if a specific location is recorded with moderate traffic 10 times and in a specific area there is only one detection out of 10 recordings, then this might be a false positive. To this end, the minimal number of trails $num_t$ may ensure a certain number of detections in relation to the recordings.

As a further pre-processing step, the extraction of the trajectories of lane centers may be performed based on a processed density map s(D) and/or processed driving direction density maps s $(D_d)$ , wherein the processed density map s(D) and the processed driving direction density maps s $(D_d)$ are obtained by employing a function (smoothing function or filter function) to the density map D and the driving direction density maps $D_d$ to determine respective local density maxima in a perpendicular direction to the aggregated trails and the driving direction specific aggregated trails.

The function may be, for example, a convolution filter may be applied. For example, density map D and the direction density maps $D_d$ may be processed by applying a convolution with stride s = 1, kernel size k = 20, zero padding and fixed kernel weights of 1. Further, zero padding may be employed.

The processed density maps s(d), s $(D_d)$ may be more suitable for the following extraction of lane centers than the density maps D, $D_d$. For example, if we have only the trail of one vehicle, then the corresponding values in the density map D are 1. In the density map s(D) the values would be different: the values in the corresponding center of the trail are higher than the values to the site of the trail. Thus, the center of the trail can be interpreted as collection of local maxima in affine subspaces orthogonal to the trail.

Since only the processed density maps will be used from now on, the term 'processed' is omitted.

According to further step S230 of **Figure 9,** a pre-extraction or initial extraction of lane centers may be performed. Here, the extraction of the trajectories of lane centers may be performed by tracking (or following) an ordered path of the local density maxima, preferably in a forward and backward direction of the aggregated trails.

For example, the initial extraction (pre-extraction) step S230 may be performed as an iterative process. In particular, for every density map $s(D_d)$, d = 1, ... , 4 the following processing may be performed:
First, a highest value (highest local maximum) in $s(D_d)$

may be picked as starting point. From the position of the highest value in $s(D_d)$ the next highest value or the same highest value in a current direction (*ordered path*) is detected. For example, if the density map $s(D_3)$ representing the direction south to west is considered, the next position is determined where the left value, bottom left value or bottom value is the highest or has the same value. Pre-extracting with regard to the discretized orientation or direction d is referred to as forward extraction. In the backward extraction, the processing is performed as in the forward process with the same starting point, but in opposite direction of d. In the present example the values to the top, top right and right from the current position are evaluated to detect the next highest value.

The forward and backward extraction stops if at least one of the first conditions is met: 1) the end of the map is arrived, 2) the next value would be 0 which means there is no trail information, or 3) if the next value is a predetermined amount smaller (e.g. 50% smaller) than the mean of the already extracted values. The idea of the last stopping condition 3) is to avoid lane mixing in case of parallel lanes with same direction.

After the pre-extraction of the first lane center part, the values in region around the extracted values are set to 0 and we start with picking the highest value on the updated density map $s(D_d)$ This iterative process ends when all values in $s(D_d)$ are 0.

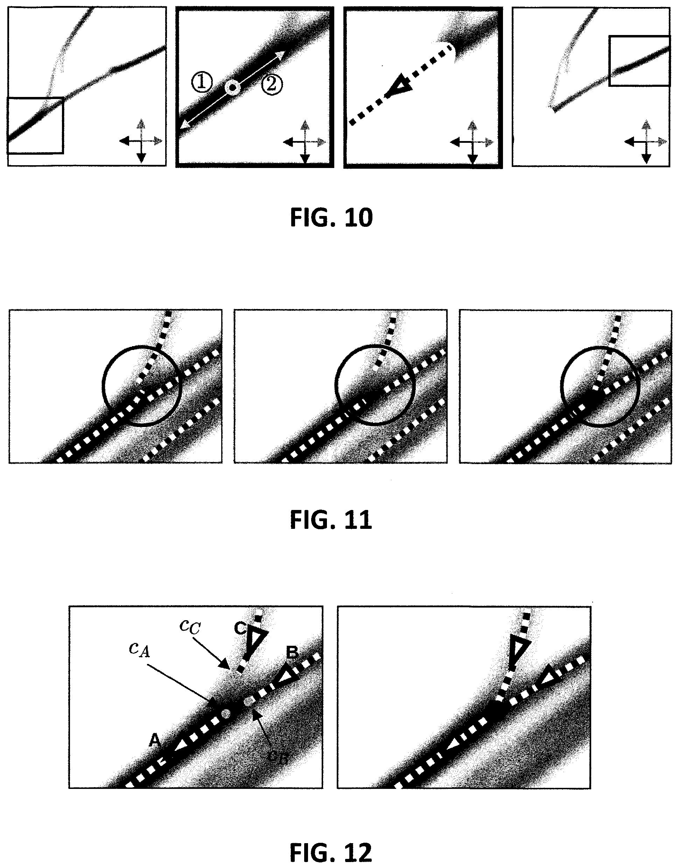

**Figure 10** illustrates the first iteration of the pre-extraction. Here, the left panel shows $s(D_3)$ and an inserted box area related to the highest density values. In this box area, the local density maxima are followed in a forward (1) and backward (2) direction (second panel). Then, after extracting the first trajectory of the lane centers (highlighted dotted line in the third panel), the values around the extracted first trajectory of the lane centers are set to 0, and the iteration continues with the next lane center area which is identified by the black box in the fourth panel of **Figure 10.**

According to step S250 of **Figure 9,** a post-processing of cutting and connecting extracted trajectories of lane centers is performed. Here, due to the pre-extraction in step S230, where the region around extracted lane centers is set to 0, the endings of extracted lane centers may not be connected to the endings of adjacent endings of lane centers, see left panel in **Figure 11** illustrating the post-processing of cutting and connecting extracted trajectories of lane centers.

To this end, a cutting and a connection step may be employed. In the cutting step, endings of all lane center trajectories are considered to determine if their positions are within the region's heighest values of their corresponding direction density map s(D). That is, it is determined whether the positions belong to a region (e.g. a quadratic or circular region of a specified size in which the corresponding direction density map value is within a predetermined portion (e.g. 25%) of highest values. If this is not the case, the respective ending is cut off, see the center panel in **Figure 11.**

In order to have a directed graph representation, adjacent lane centers may subsequently be connected. **Figure 12** shows further details of the connecting of extracted trajectories of lane centers. Here, end coordinates $c_A$, $c_B$ and $c_C$ (of lane center trajectories A, B, C) are unconnected, meaning that not any other lane center trajectory has coordinates that are the same. First, lane center trajectory A may be attempted to be connected with another lane.

For this, pre-extraction (backward part) is performed with starting position $c_A$. In this case, the trail is continued until $c_B$ is in the near region, as explained above.

Thus, the updated lane center A is connected with B, so $c_A = c_B$. Due to this update, $c_B$ is connected and nothing has to be done with regard to B. However, lane center trajectory C is still pending. The processing is performed analogously to A and will thus connect with A. Here, it is the forward part for C of the pre-extraction. The result is shown in the right panel. The connecting is stopped due to another stopping condition: a plausible lane center is in near range.

In other words, in the connection part, the pre-extraction part may be employed for every lane center ending that is unconnected. However, a connecting operation may be done on the density map s(D) without distinguishing the direction of the density map. Furthermore, the processing stops in the near range of a plausible lane center. A lane center in near range is plausible, if its direction is not the opposite direction of the considered trajectory (which is to be connected). The results of the connection processing is shown in the right panels of Figure 11 and 12.

The skilled person understands that the above embodiments to extract trajectories of lane centers is a deterministic method. These embodiments advantageously avoid applying machine leaning algorithms and the like which otherwise would require extensive training based on ground truths that may not be available for any traffic environment or any geographical region. However, also a properly trained machine-learning algorithm can be applied to extract the trajectories of lane centers.

Each lane center may be given as a list with its coordinates, ordered with regard to the driving direction. Due to the above extraction method, the coordinates are connected and may contain redundant coordinates for the lane center representation, e.g. in the case of straight lanes. The redundant coordinates can be removed, for example with a Ramer-Douglas-Peucker algorithm [9]: Ramer et al. "An iterative procedure for the polygonal approximation of plane curves", Computer graphics and image processing, 1(3):244-256, 1972, and [10]: Douglas et al. "Algorithms for the reduction of the number of points required to represent a digitized line or its caricature" Cartographica: the international journal for geographic information and geovisualization, 10(2):112-122, 1973. This can also be used for a smoothing of the extracted lane center trajectories. In terms of a directed graph representation of the map, the lane center trajectories i.e. the connection of two coordinates may be considered as edges and the coordinates itself as well as connection of lane center trajectories may be considered as nodes (e.g. a fork or merger as shown in **Figure 7).**

The extracted lane center trajectories from the four direction trail maps may then be re-projected to the map and world coordinates and collected in one map. As such, the aggregated trails and trajectories of trail centers may be represented in a directed graph representation (i.e. a structed data set) of the map (HD map) which includes corresponding driving directions. The directed graph representation may further include one or more of a representation of a vehicle density, a lane fork, a lane merger, and a lane boundary.

Such an HD map can thus be easily generated and constantly updated by the cloud server 20. The HD map (and associated collected meta-information, see below) can be downloaded to the fleet of vehicles 20 and may advantageously be used for improved ADAS functionality. That is, the HD map can set a framework in which the vehicles 20 can move, and furthermore can be seen as a backup solution when the live ADAS system fails or a camera thereof is occluded.

In a preferred embodiment, the above determination of aggregated trails may be expanded to also include aggregated trails for pedestrians. That is, the sensor-based data can also be used to determine a plurality of individual pedestrian trails (*third trails*), and the plurality of individual pedestrian trails can be aggregated to determine aggregated pedestrian trails which also can be included in the grid map representation of the map. That is, the map may thus also include pedestrian-related information such as sidewalks, Zebra crossings and the like. Here, the detection of the pedestrians and the aggregation of the individual trails can be performed by using the sensor-based detection explained above and the aggregation of individual trails as explained above for the example of vehicular traffic.

Therefore, the generated maps are more reliable as compared to conventional maps because the maps better reflect the current traffic situation which also can include specific accurate information as to pedestrian movement and lane crossings.

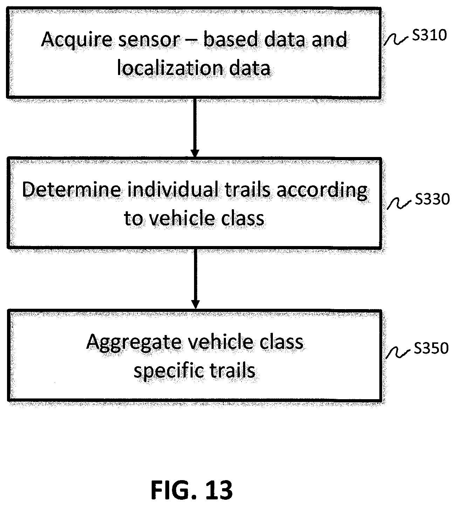

**Figure 13** shows a method according to a further embodiment for determining vehicle class specific aggregated trails. According to step S310 of **Figure 13,** sensor-based data and localization data are acquired (as explained above for step S110 in **Figure 5).**

According to step S330 of **Figure 13,** the individual trails of the vehicles (as determined according to step S130 in **Figure** 5 explained above) can be further distinguished according to a plurality of vehicles classes.

That is, a plurality of vehicle classes can be considered, for example, a first vehicle class with regard to cars, a second vehicle class with regard to busses, a third vehicle class with regard to trucks, a fourth vehicle class with regard to motorcycles, and a fifth vehicle class with regard to bicycles. The skilled person understands that this is a non-limiting example of such object classes and other more or less specific classes can also be considered, for example, a first vehicle class regarding 4 wheeled vehicles and a second vehicle class regarding 2 wheeled vehicles.

As discussed above, using the acquired sensor data, a plurality of different vehicles can thus be detected and tracked over time to determine individual trails for each of a plurality of vehicle classes (*vehicle class specific second trails*). Further, using the localization (e.g. using GPS) data in GCS, the relative positions of radar and/or LiDAR detections of a vehicle and the tracking of vehicles can also be transformed into the GCS so that the individual vehicle trails can also be provided in the GCS. Therefore, the also the vehicle class specific second trails may generally be considered as a path or trajectory (set of coordinates in space) that a tracked vehicle follows over time in the GCS.

According to step S350 in **Figure 13,** the method may further aggregate each of the individual vehicle class specific trails to determine a plurality of vehicle class specific aggregated trails in the grid cell map representation of the map (HD map).

The map can therefore accumulate the presence, driving direction and observed speed, which can be distinguished for different vehicle classes. Based thereon, specific lanes can be detected, such as bus lanes, but also bypass or other special lanes that can only be used by specific classes of vehicles.

The embodiment of **Figure 13** preferably uses radar-based sensor data for the determination of the individual trails which avoids the costs of using LiDAR sensors for the map generation. That is, this is a low-cost variant to build, maintain and update such maps based on information which is readily available in existing ADAS vehicles.

Further, when determining the individual trails, meta-information associated with the individual trails such as speed data (e.g. based on detected Doppler values), distance to ego-vehicle, classification result, date and time of trail detection and the like may also be kept, e.g. stored in association with the individual trails. That is, the information of the determined second trails is preferably stored together with meta information of a detected vehicle class and/or pedestrian class.

This stored meta-information may also be included in the aggregated trails, which may also include meta information related to the creation and/or usage of the aggregated trails.

This meta-information can advantageously be used to use only individual second trails for the aggregation which have been determined within the last hour or so (i.e. within a specific amount of time). Using this meta-information, the maps can be based on detection and tracking information of the fleet of vehicles in the last, e.g. 5 hours or 2 days (i.e. a specific amount of time) .

This further allows to generate highly accurate aggregated trails and corresponding meta-information such as average speed which better reflects the current traffic conditions. The skilled person understands that this is useful in scenarios in which, for example, the legal speed limitation of a road may have been changed without updating the respective map data or a construction zone may suddenly cause mapped lane markers to become invalid. The meta-information may also include a confidence value based on the total amount of individual trails *(second trails)* being aggregated.

Therefore, the hereby generated maps can be provided with accurate and up-to-date meta information such as empirical speed (i.e. the actually observed speed instead of the legally allowed one). Current changes in the empirical speed are valuable information for map change detection (e.g., construction sites, temporal traffic restrictions and the like).

Aggregated trails and correspondingly updated maps may be made public, e.g. by the cloud server, only after a critical amount of "consensus" is reached, i.e. only after a certain minimum number of individual trails (overall and/or per class) have been observed per grid cell of the map.

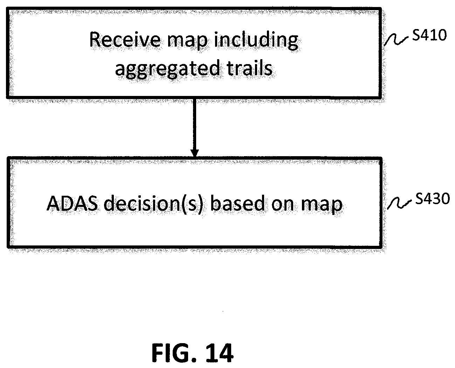

**Figure 14** shows a method implemented by vehicle according to a further embodiment. A vehicle 10 has a communication interface (such as I/F 310 in **Figure 4)** to communicate with the cloud server 20. Via the communication interface, the vehicle 10 can receive a map (HD map) which has been generated according to one of the embodiments described above (step S410). The vehicle further has a control unit (such as the processor 320 in **Figure 4,** or the driver assistance system 200 of the vehicle 10. The driver assistance system of the vehicle 200 in **Figure 2).** The control unit makes advanced driving and safety decisions (e.g. ADAS and/or AD decisions) based on the received map which includes information aggregated tails and/or meta-information as described above (step S430). Therefore, the vehicle 10 has not only access to its own perception information extracted from the equipped sensors but also to the aggregated trails and/or meta-information from the aggregation service of the cloud server and can therefore make improved ADAS decisions.

For example, the aggregated trails and meta-information of the received map includes information regarding updated average speed driven on lanes and how recent this information was, which can be used to perform an efficient rout planning.

According to a preferred embodiment, the control unit may be configured to use only aggregated trails in the map which have been aggregated by using a minimum number of individual trails and/or have been aggregated by using a minimum number of trails determined within a specific amount of time in the past. In particular, aggregated trails can carry meta-information about how many individual trails have been used to generate (and confirm correctness of) this aggregated trail, as described above. The aggregated trails can further carry meta-information about how old the latest trails were when being aggregated into this aggregated trail. The control unit of the ADAS system can thus now determine a "quality" of this aggregated trail by only consuming those trails which

a) have received enough total individual trails (e.g. minimum number of 100 individual trails) and/or b) have received enough recent trails (e.g. a minimum of 10 trails in the last 10 minutes). The skilled person understands that the specific examples of a minimum number of individual trails and the minimum number of trails within a last specific amount of time are non-limiting examples.

This method ensures that correctness and accurateness of the consumed trails can be confirmed by the control unit of the ADAS system before using these aggregated trails for ADAS decisions. That is, the control unit may be further configured to output a control instruction to the vehicle to follow one of the aggregated trails extracted from the received map, in particular in case of a blocking situation of the camera of the vehicle.

More specifically, the ADAS vehicle 10 may be equipped with state-of-the-art L2 autonomous driving capabilities, and thus can actively follow lane markers by observing them with its own perception sensors (e.g. a camera system) and/or can thus actively control its longitudinal distance to any leading vehicle (e.g. by deploying a radar for distance measurements). If, and only if, the perception software fails to observe its surrounding (e.g. due to a camera blockage or being blinded by direct sunlight), a typical ADAS Vehicle will stop functioning and alerting the driver to take over control of the vehicle. This interruption can happen spontaneously and without pre-warning time for the driver. As the system requires an immediate take-over from the human driver and thus the constant attention of the driver, it can only qualify as a L2 autonomous driving system.

With the additional information (aggregated trails and/or meta-information) from the cloud aggregation service of the cloud server 20 being made available and preferably the confirmation of "correctness" and "accurateness" as outlined above, the control unit of the ADAS system can now perform a different approach to handle this "blockage" situation of its perception sensors. Instead of directly disabling the ADAS functionality and expecting the driver to take over immediately, the ADAS system can thus fallback to following an aggregated trail on the map it received from the cloud service (cloud server).

The control unit preferably applies this fallback only under the following conditions: a) Perception of other road users (e.g. based on radar sensor(s)) is still functional, thus it can be guaranteed that the road ahead is actually free of obstacles and b) the consumed aggregated trails of the map are recent and accurate, as described above.

According to a further preferred embodiment of making ADAS decisions based on the received map, the control unit may be further configured to output a control instruction to the vehicle 10 to follow the aggregated trail as long as the aggregated trails are accurate.

That is, the data related to the aggregated tails and/or meta-information received from the cloud aggregation service (cloud server 20) provide a "look-ahead" for the ADAS system to enable "trail following". As long as there is enough "look-ahead" information available, thus there are enough aggregated trails available which satisfy the above conditions to be considered "recent" and/or "accurate", the control unit can continue to operate as normal by following these trails, similar to the traditional concept of classical "platooning".

At some point in time, there will come a point where no more aggregated trails can be consumed, either because a) No more trails are previously observed by other ADAS vehicles and thus the aggregated trail service cannot provide any information, or b) the provided trails do no longer qualify as "recent" and "accurate" as only too little or too old data has been aggregated. In this situation, the control unit of the ADAS system can announce an alert to the driver that it will shut of its function, similar to the situation without this additional trail information. However, in general, the lead-time for the driver to take over will be higher as the ADAS System can "look-ahead" longer and decide "ahead of time" when it will run out of sufficient information to stay functional.

According to a further preferred embodiment of making ADAS decisions based on the received map, the control unit may be further configured to determine a curve speed recommendation based on the received map, in particular the shape of aggregated trails and meta-information included therein such as the average speed information.

That is, applying the "look-ahead" provided by the consumed aggregated trails from the aggregation service, the control unit of the ADAS vehicle can calculate an appropriate velocity for the next curve to come. This recommended speed can be calculated as in classical speed recommendation systems (e.g., based on the road curvature) but without the need of the perception software stack to actually perceive the road geometry ahead. This allows for a much smoother regulation of the driving speed and the vehicle has much more time to decelerate. Depending on the difference in actual and recommended speed, the system my even continue functioning instead of alerting the driver and shutting off. This will increase the comfort and perceived availability of the speed recommendation function significantly and thus leads to a much wider acceptance range of such a system.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the embodiments presented herein in any way.

While this specification contains many specific embodiment details, these should not be construed as limitations on the scope of what may be claimed, but rather as descriptions of features specific to particular embodiments described herein.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses, devices and units described herein may be embodied in other specific forms without departing from the characteristics thereof. The foregoing embodiments are illustrative rather than limiting of the described systems and methods. Scope of the apparatuses described herein is thus defined by the appended claims, rather than the foregoing description, and changes that come within the meaning and range of the claims are embraced therein.

**Claims**

1. A computer-implemented method of generating a map, comprising the steps of:

   - acquiring (S110) sensor-based data of a sensor unit of at least one vehicle and localization data related to a localization unit of the at least one vehicle;
   - determining (S130) a first trail of the at least one vehicle using the localization data and a plurality of second trails of other vehicles using the sensor-based data;

   **characterized in that** the method further comprises the steps of:

   - aggregating (S150) the first trail and the plurality of second trails to generate aggregated trails in a grid map representation of the map; and
   - extracting trajectories of lane centers for the map from the aggregated trails.

2. The computer-implemented method of claim 1, further classifying the first trail and the plurality of second trails according to a predetermined set of different driving directions and generating a plurality of driving direction specific aggregated trails.

3. The computer-implemented method of one of claims 1 - 2, wherein the aggregated trails are associated with a density map ($D$) and the driving direction specific aggregated trails are associated with driving direction density maps ($D_d$), the density map and the driving direction density maps being generated using data collected from the first trail and/or the plurality of second trails.

4. The computer-implemented method of one of claims 1 - 3,

   wherein local grid cell regions of the map have respective aggregated trail values which are initially set to zero and increased by one for every trail going through a respective local grid cell region, and
   wherein the extraction of the trajectories of lane centers is performed by selecting aggregated trail values greater or equal than a predetermined threshold.

5. The computer-implemented method of one of claims 1 - 4, wherein the extraction of the trajectories of lane centers is performed based on a processed density map ($s(D)$) and/or processed driving direction density maps ($s(D_d)$), the processed density map ($s(D)$) and the processed driving direction density maps ($s(D_d)$) being obtained by employing a function to the density map ($D$) and the driving direction density maps ($D_d$) to determine respective local density maxima in a perpendicular direction to the aggregated trails and the driving direction specific aggregated trails, wherein the density map represents a density of moving vehicles, and wherein the driving direction density maps are derived from the density map.

6. The computer-implemented method of claim 5, wherein the extraction of the trajectories of lane centers is performed by tracking an ordered path of the local density maxima.

7. The computer-implemented method of claim 6, wherein the trajectories of lane centers is post-processed to connect endings of the extracted trajectories of the lane centers.

8. The computer-implemented method of one of claims 1 - 7, further comprising:

   - representing the aggregated trails in a directed graph representation of the map including a driving direction.

9. The computer-implemented method of claim 8, wherein the directed graph representation further includes one or more of a representation of a vehicle density, a lane fork, a lane merger, and a lane boundary.

10. The computer-implemented method of one of claims 1 - 9, further comprising:

    - determining a plurality of third trails of pedestrians using the sensor-based data; and
    - aggregating the plurality of third trails to generate aggregated pedestrian trails in the grid map representation of the map.

11. The computer-implemented method of one of claims 1 - 10, wherein:

- the plurality of the second trails of the other vehicles are determined (S330) by distinguishing the other vehicles according to vehicle classes and determining a set of vehicle class specific second trails; and

further comprising:

- aggregating (S350) the plurality of vehicle class specific second trails to generate vehicle class specific aggregated trails in the grid map representation of the map.

12. The computer-implemented method of one of claims 1 - 11, further comprising:

- storing the determined second trails together with meta information related to the second trails and/or the aggregated trails.

13. The computer-implemented method of one of claims 1 - 12, further comprising:

- storing the determined second trails together with meta information related to a respective detection of vehicle classes.

14. The computer-implemented method of one of claims 1 - 13, wherein the grid map representation of the map includes average speed information for respective grid cells of the map.

15. The computer-implemented method of one of claims 1 - 14, wherein the sensor-based data are radar-sensor based data and/or LiDAR-sensor based data.

16. The computer-implemented method of one of claims 1 - 15, wherein the localization data are GPG-based data.

17. A cloud server (20), adapted to perform the method of any of claim 1 - 16.

18. A vehicle (10), comprising:

- a communication interface configured to receive (S410) a map generated by a method according to claim 1, from a cloud server according to claim 17; and
- a control unit configured to make (S430) advanced driving and safety decisions based on the received map by accessing aggregated trails information included in the received map.

19. The vehicle of claim 18, wherein the control unit is configured to only use aggregated trails in the map which have been aggregated by using a minimum number of individual trails and/or have been aggregated by using a minimum number of trails determined within a specific amount of time in the past.

20. The vehicle of one of claims 18 - 19, wherein the control unit is configured to output a control instruction to the vehicle to follow one of the aggregated trails from the received map.

21. The vehicle of claim 20, wherein the control unit is further configured to output the control instruction to the vehicle to follow the one of the aggregated trails as long as the aggregated trail is accurate.

22. The vehicle of one of claims 18 - 21, wherein the control unit is further configured to determine a curve speed recommendation based on the received map.

23. A system, comprising a cloud server (30) of claim 17 and a plurality of vehicles (10) of one of claims 18 - 22.

**Patentansprüche**

1. Computerimplementiertes Verfahren zum Erzeugen einer Karte, umfassend die folgenden Schritte:

- Erfassen (S110) sensorbasierter Daten einer Sensoreinheit von mindestens einem Fahrzeug und Lokalisierungsdaten bezüglich einer Lokalisierungseinheit des mindestens einen Fahrzeugs;
- Bestimmen (S130) einer ersten Route des mindestens einen Fahrzeugs unter Verwendung der Lokalisierungsdaten und einer Vielzahl von zweiten Routen von anderen Fahrzeugen unter Verwendung der sensorbasierten Daten;

**gekennzeichnet dadurch, dass** das Verfahren ferner die folgenden Schritte umfasst:

- Zusammenfassen (S150) der ersten Route und der Vielzahl zweiter Routen, um zusammengefasste Routen in einer Rasterkarten-Darstellung der Karte zu erzeugen; und
- Extrahieren von Verläufen der Fahrspurmitten für die Karte aus den zusammengefassten Routen.

2. Computerimplementiertes Verfahren nach Anspruch 1, das ferner die erste Route und die Vielzahl von zweiten Routen nach einem vorbestimmten Satz verschiedener Fahrtrichtungen klassifiziert und eine Vielzahl von fahrtrichtungsspezifischen zusammengefassten Routen erzeugt.

3. Computerimplementiertes Verfahren nach einem der Ansprüche 1 bis 2, wobei die zusammengefassten Routen mit einer Dichtekarte (D) verbunden sind, und die fahrtrichtungsspezifischen zusammengefassten Routen mit Fahrtrichtungs-Dichtekarten ($D_d$) verbunden sind, wobei die Dichtekarte und die Fahrtrichtungs-Dichtekarten unter Verwendung von Daten erzeugt werden, die von der ersten Route und/oder der Vielzahl zweiter Routen erfasst wurden.

4. Computerimplementiertes Verfahren nach einem der Ansprüche 1 bis 3, wobei die lokalen Rasterzellenbereiche der Karte entsprechende zusammengefasste Routenwerte aufweisen, die anfangs auf Null gesetzt sind und für jede Route, die durch einen entsprechenden lokalen Rasterzellenbereich läuft, um 1 erhöht werden, und wobei die Extraktion der Verläufe der Fahrspurmitten durch Auswählen zusammengefasster Routenwerte ausgeführt wird, die größer oder gleich einem vorbestimmten Schwellenwert sind.

5. Computerimplementiertes Verfahren nach einem der Ansprüche 1 bis 4, wobei die Extraktion der Verläufe der Fahrspurmitten ausgeführt wird, basierend auf einer verarbeiteten Dichtekarte (s (D)) und/oder verarbeiteten Fahrtrichtungs-Dichtekarten (s ($D_d$)), wobei die verarbeitete Dichtekarte (s (D)) und die verarbeiteten Fahrtrichtungs-Dichtekarten (s ($D_d$)) durch Anwenden einer Funktion auf die Dichtekarte (D) und die Fahrtrichtungs-Dichtekarten ($D_d$) erhalten werden, um entsprechende lokale Dichtemaxima in einer senkrechten Richtung zu den zusammengefassten Routen und den fahrtrichtungsspezifischen zusammengefassten Routen zu bestimmen, wobei die Dichtekarte eine Dichte von sich bewegenden Fahrzeugen darstellt und wobei die Fahrtrichtungs-Dichtekarten von der Dichtekarte abgeleitet sind.

6. Computerimplementiertes Verfahren nach Anspruch 5, wobei die Extraktion der Verläufe der Fahrspurmitten durch Nachverfolgen eines geordneten Pfads der lokalen Dichtemaxima ausgeführt wird.

7. Computerimplementiertes Verfahren nach Anspruch 6, wobei die Verläufe der Fahrspurmitten nachbearbeitet werden, um Endpunkte der extrahierten Verläufe der Fahrspurmitten zu verbinden.

8. Computerimplementiertes Verfahren nach einem der Ansprüche 1 bis 7, ferner umfassend:

- Darstellen der zusammengefassten Routen in einer gerichteten grafischen Darstellung der Karte, einschließlich einer Fahrtrichtung.

9. Computerimplementiertes Verfahren nach Anspruch 8, wobei die gerichtete grafische Darstellung ferner eine oder mehrere aus einer Darstellung einer Fahzeugdichte, einer Fahrspurgabelung, einer Fahrspurzusammenführung und einer Fahrspurbegrenzung einschließt.

10. Computerimplementiertes Verfahren nach einem der Ansprüche 1 bis 9, ferner umfassend:

- Bestimmen einer Vielzahl von dritten Routen von Fußgängern unter Verwendung der sensorbasierten Daten; und
- Zusammenfassen der Vielzahl von dritten Routen, um zusammengefasste Fußgängerrouten in der Rasterkarten-Darstellung der Karte zu erzeugen.

11. Computerimplementiertes Verfahren nach Anspruch 1 bis 10, wobei:

- die Vielzahl der zweiten Routen der anderen Fahrzeuge durch Unterscheiden der anderen Fahrzeuge nach Fahrzeugklassen und Bestimmen eines Satzes von fahrzeugklassenspezifischen zweiten Routen bestimmt wird (S330) ; und

ferner umfassend:

- Zusammenfassen (S350) der Vielzahl von fahrzeugklassenspezifischen zweiten Routen, um fahrzeugklassenspezifische zusammengefasste Routen in der Rasterkarten-Darstellung der Karte zu erzeugen.

12. Computerimplementiertes Verfahren nach einem der Ansprüche 1 bis 11, ferner umfassend:

- Speichern der bestimmten zweiten Routen zusammen mit Meta-Informationen in Bezug auf die zweiten Routen und/oder die zusammengefassten Routen.

13. Computerimplementiertes Verfahren nach einem der Ansprüche 1 bis 12, ferner umfassend:

- Speichern der bestimmten zweiten Routen zusammen mit Meta-Informationen in Bezug auf das entsprechende Erfassen von Fahrzeugklassen.

14. Computerimplementiertes Verfahren nach einem der Ansprüche 1 bis 13, wobei die Rasterkarten-Darstellung der Karte Durchschnittsgeschwindigkeitsinformationen für entsprechende Rasterzellen der Karte einschließt.

15. Computerimplementiertes Verfahren nach einem der Ansprüche 1 bis 14, wobei die sensorbasierten Daten radarsensorbasierte Daten und/oder LiDAR-sensorbasierte Daten sind.

16. Computerimplementiertes Verfahren nach einem der Ansprüche 1 bis 15, wobei die Lokalisierungsdaten GPG-basierte Daten sind.

17. Cloud-Server (20), der angepasst ist, das Verfahren eines der Ansprüche 1 bis 16 auszuführen.

18. Fahrzeug (10), umfassend:

- eine Kommunikationsschnittstelle, die konfiguriert ist, eine Karte von einem Cloud-Server nach Anspruch 17 zu empfangen (S410), die durch ein Verfahren nach Anspruch 1 erzeugt wurde; und
- eine Steuereinheit, die konfiguriert ist, erweiterte Fahr- und Sicherheitsentscheidungen zu treffen (S430), basierend auf der empfangenen Karte, mittels Zugriff auf zusammengefasste Routeninformationen, die in die empfangene Karte eingeschlossen sind.

19. Fahrzeug nach Anspruch 18, wobei die Steuereinheit so konfiguriert ist, dass sie nur zusammengefasste Routen in der Karte verwendet, die unter Verwendung einer Mindestanzahl an einzelnen Routen zusammengefasst wurden und/oder unter Verwendung einer Mindestanzahl an Routen, die innerhalb einer spezifischen Zeitspanne in der Vergangenheit bestimmt wurden, zusammengefasst wurden.

20. Fahrzeug nach einem der Ansprüche 18 bis 19, wobei die Steuereinheit konfiguriert ist, eine Steueranweisung an das Fahrzeug auszugeben, um einer der zusammengefassten Routen der empfangenen Karte zu folgen.

21. Fahrzeug nach Anspruch 20, wobei die Steuereinheit ferner konfiguriert ist, die Steueranweisung an das Fahrzeug auszugeben, um der einen der zusammengefassten Routen, solange die zusammengefasste Route geeignet ist, zu folgen.

22. Fahrzeug nach einem der Ansprüche 18 bis 21, wobei die Steuereinheit ferner konfiguriert ist, eine Kurvengeschwindigkeitsempfehlung basierend auf der empfangenen Karte zu bestimmen.

23. System, umfassend einen Cloud-Server (30) nach Anspruch 17 und eine Vielzahl von Fahrzeugen (10) nach einem der Ansprüche 18 bis 22.

**Revendications**

1. Procédé de génération de carte mis en œuvre par ordinateur comprenant les étapes suivantes :

- l'acquisition (S110) de données basées sur capteur d'une unité de capteur d'au moins un véhicule et de données de localisation relatives à une unité de localisation dudit au moins un véhicule ;
- la détermination (S130) d'une première trace dudit au moins un véhicule à l'aide des données de localisation et d'une pluralité de deuxièmes traces d'autres véhicules à l'aide des données basées sur capteur ;

**caractérisé en ce que** le procédé comprend en outre les étapes suivantes :

- l'agrégation (S150) de la première trace et de la pluralité de deuxièmes traces pour générer des traces agrégées dans une représentation cartographique en grille de la carte ; et
- l'extraction des trajectoires des centres de voie pour la carte à partir des traces agrégées.

2. Procédé mis en œuvre par ordinateur selon la revendication 1, classifiant en outre la première trace et la pluralité de deuxièmes traces selon un ensemble prédéfini de directions de conduite différentes et générant une pluralité de traces agrégées spécifiques à la direction de conduite.

3. Procédé mis en œuvre par ordinateur selon l'une des revendications 1 et 2, dans lequel les traces agrégées sont associées à une carte de densité (D) et les traces agrégées spécifiques à la direction de conduite sont associées à des cartes de densité de la direction de conduite ($D_d$), la carte de densité et les cartes de densité de la direction de conduite étant générées à l'aide des données collectées à partir de la première trace et/ou de la pluralité de deuxièmes traces.

4. Procédé mis en œuvre par ordinateur selon l'une des revendications 1 à 3, dans lequel des régions de cellules de grille locale de la carte présentent des valeurs de trace agrégées respectives qui sont initialement fixées à zéro et augmentées d'une unité pour chaque trace passant par une région de cellules de grille locale respective, et dans lequel l'extraction des trajectoires des centres de voie est effectuée en sélectionnant des valeurs de trace agrégées supérieures ou égales à un seuil prédéfini.

**5.** Procédé mis en œuvre par ordinateur selon de l'une des revendications 1 à 4, dans lequel l'extraction des trajectoires des centres de voies est effectuée en fonction d'une carte de densité traitée (s $(D)$) et/ou de cartes de densité de direction de la conduite traitées (s $(D_d)$), la carte de densité traitée (s $(D)$) et les cartes de densité des directions de la conduite traitées (s $(D_d)$) étant obtenues en appliquant une fonction à la carte de densité ($D$) et les cartes de densité de la direction de conduite ($D_d$) pour déterminer les maxima de densité locaux respectifs dans une direction perpendiculaire aux traces agrégées et aux traces agrégées spécifiques de la direction de conduite, dans lequel la carte de densité représente la densité des véhicules en mouvement et dans lequel les cartes de densité de la direction de conduite sont issues de la carte de densité.

**6.** Procédé mis en œuvre par ordinateur selon la revendication 5, dans lequel l'extraction des trajectoires des centres de voie est effectuée en suivant un chemin ordonné des maximums de densité locale.

**7.** Procédé mis en œuvre par ordinateur selon la revendication 6, dans lequel les trajectoires des centres de voie sont post-traitées pour relier les extrémités des trajectoires extraites des centres de voie.

**8.** Procédé mis en œuvre par ordinateur selon l'une des revendications 1 à 7, comprenant en outre :

- la représentation des traces agrégées dans une représentation graphique dirigée de la carte comportant une direction de conduite.

**9.** Procédé mis en œuvre par ordinateur selon la revendication 8, dans lequel la représentation graphique dirigée comprend en outre une ou plusieurs d'une représentation d'une densité des véhicules, d'une bifurcation de voie, d'une fusion de voie et d'une limite de voie.

**10.** Procédé mis en œuvre par ordinateur selon l'une des revendications 1 à 9, comprenant en outre :

- la détermination d'une pluralité de troisièmes traces de piétons à l'aide des données basées sur capteur ; et
- l'agrégation de la pluralité de troisièmes traces pour générer des traces de piétons agrégées dans la représentation cartographique en grille de la carte.

**11.** Procédé mis en œuvre par ordinateur selon l'une des revendications 1 à 10, dans lequel :

- la pluralité des deuxièmes traces des autres véhicules est déterminée (S330) par la distinction des autres véhicules selon les classes de véhicules et par la détermination d'un ensemble de deuxièmes traces spécifiques à la classe de véhicules ; et

comprenant en outre :

- l'agrégation (S350) de la pluralité de deuxièmes traces spécifiques à la classe de véhicule pour générer des traces agrégées spécifiques à la classe de véhicule dans la représentation cartographique en grille de la carte.

**12.** Procédé mis en œuvre par ordinateur selon l'une des revendications 1 à 11, comprenant en outre :

- la mémorisation des deuxièmes traces déterminées conjointement avec des méta-informations relatives aux deuxièmes traces et/ou aux traces agrégées.

**13.** Procédé mis en œuvre par ordinateur selon l'une des revendications 1 à 12, comprenant en outre :

- la mémorisation des deuxièmes traces déterminées conjointement avec des méta-informations relatives à une détection respective des classes de véhicule.

**14.** Procédé mis en œuvre par ordinateur selon l'une des revendications 1 à 13, dans lequel la représentation cartographique en grille de la carte comprend des informations de vitesse moyenne pour des cellules de grille respectives de la carte.

**15.** Procédé mis en œuvre par ordinateur selon l'une des revendications 1 à 14, dans lequel les données basées sur capteur sont des données basées sur capteur radar et/ou des données basées sur capteur LiDAR.

**16.** Procédé mis en œuvre par ordinateur selon l'une des revendications 1 à 15, dans lequel les données de localisation sont des données basées sur GPG (le gardien de la vie privée).

**17.** Serveur en nuage (20), adapté à effectuer le procédé selon une quelconque revendication 1 à 16.

**18.** Véhicule (10) comprenant :

- une interface de communication conçue pour recevoir (S410) une carte générée par un procédé selon la revendication 1, à partir d'un serveur en nuage selon la revendication 17 ; et
- une unité de commande conçue pour prendre (S430) des décisions avancées de conduite et de sécurité en fonction de la carte reçue en accédant à des informations de traces agrégées incluses dans la carte reçue.

19. Véhicule selon la revendication 18, dans lequel l'unité de commande est conçue pour n'utiliser que des traces agrégées dans la carte qui ont été agrégées à l'aide d'un nombre minimum de traces individuelles et/ou ont été agrégées à l'aide d'un nombre minimum de traces déterminées dans une quantité de temps spécifique dans le passé.

20. Véhicule selon l'une des revendications 18 à 19, dans lequel l'unité de commande est conçue pour produire une instruction de commande pour le véhicule afin de suivre l'une des traces agrégées à partir de la carte reçue.

21. Véhicule selon la revendication 20, dans lequel l'unité de commande est conçue en outre pour produire l'instruction de commande pour le véhicule afin de suivre l'une des traces agrégées tant que la trace agrégée est précise.

22. Véhicule selon l'une des revendications 18 à 21, dans lequel l'unité de commande est conçue en outre pour déterminer une recommandation de vitesse en virage en fonction de la carte reçue.

23. Système, comprenant un serveur en nuage (30) selon la revendication 17 et une pluralité de véhicules (10) selon l'une des revendications 18 à 22.

**FIG. 1**

**FIG. 2**

**FIG. 3**

**FIG. 4**

Acquire sensor – based data and localization data $\sim$ S110

Determine individual trails $\sim$ S130

Aggregate individual trails $\sim$ S150

**FIG. 5**

**FIG. 6**

**FIG. 7**

**FIG. 8**

Pre-processing aggregated trails $\sim$S210

Pre-extraction $\sim$S230

Cutting and connecting $\sim$S250

**FIG. 9**

**FIG. 10**

**FIG. 11**

**FIG. 12**

Acquire sensor – based data and localization data    ⟿ S310

Determine individual trails according to vehicle class    ⟿ S330

Aggregate vehicle class specific trails    ⟿ S350

## FIG. 13

Receive map including
aggregated trails    $\sim$ S410

ADAS decision(s) based on map    $\sim$ S430

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200125102 A1

- US 20210063200 A1

### Non-patent literature cited in the description

- **CAO**. From gps traces to a routable road map. *In Proceedings of the 17th ACM SIGSPATIAL international conference on advances in geographic information systems*, 2009, 3-12
- **TANG et al.** Lane-level road information mining from vehicle gps trajectories based on naive bayesian classification. *ISPRS International Journal of Geo-Information*, 2015, vol. 4 (4), 2660-2680
- **HOMAYOUNFAR et al.** Learning to map by discovering lane topology. *In Proceedings of the IEEE/CVF International Conference on Computer Vision*, 2019 (4), 2911-2920
- **ZÜRN** ; **LANE GRAPH ESTIMATION FOR SCENE UNDERSTANDING IN URBAN DRIVING et al.** *arXiv preprintarXiv:2105.00195*, 2021
- Anytime lane-level intersection estimation based on trajectories of other traffic participants. **MEYER et al.** In 2019 IEEE Intelligent Transportation Systems Conference (ITSC). IEEE, 2019, 3122-3129
- Fast lane-level intersection estimation using markov chain monte carlo sampling and b-spline refinement. **MEYER et al.** In 2020 IEEE Intelligent Vehicles Symposium (IV). IEEE, 2020, 71-76

- How to keep hd maps for automated driving up to date. **PANNEN et al.** In 2020 IEEE International Conference on Robotics and Automation (ICRA). IEEE, 2020, 2288-2294
- **KIM et al.** Hd map update for autonomous driving with crowdsourced data. *IEEE Robotics and Automation Letters*, 2021, vol. 6 (2), 1895-1901
- **MANJUNATH et al.** Radar Based detection and Tracking for Autonomous Driving. *IEEE MTT-S International Conference on Microwaves for Intelligent Mobility*, 2018
- **BEUCHER**. The Watershed Transformation Applied to Image Segmentation. *Scanning Microscopy*, vol. 1992 (6)
- **RAMER et al.** An iterative procedure for the polygonal approximation of plane curves. *Computer graphics and image processing*, 1972, vol. 1 (3), 244-256
- **DOUGLAS et al.** Algorithms for the reduction of the number of points required to represent a digitized line or its caricature. *Cartographica: the international journal for geographic information and geovisualization*, 1973, vol. 10 (2), 112-122